# FASCICULE DE BREVET EUROPEEN

(11) **EP 3 245 683 B1**
(45) Date de publication et mention de la délivrance du brevet: **03.10.2018**
(21) Numéro de dépôt: 16700650.1
(22) Date de dépôt: 15.01.2016
(51) Int. Cl.: H01M 8/02, C25B 9/08

(54) **PROCEDE DE FABRICATION DE JOINTS SUR DES COMPOSANTS DE REACTEUR ELECTROCHIMIQUE**
VERFAHREN ZUR HERSTELLUNG VON DICHTUNGEN AUF ELEKTROCHEMISCHEN REAKTORKOMPONENTEN
METHOD FOR PRODUCING SEALS ON ELECTROCHEMICAL REACTOR COMPONENTS

(30) Priorité: 16.01.2015 FR 1550352
(43) Date de publication de la demande: 22.11.2017
(73) Titulaire: Areva Stockage d'Energie, 13547 Aix en Rpovence Cedex 4 (FR)
(72) Inventeur: TRUNDE, Sylvain, 13860 Peyrolles en Provence (FR); CLERGUE, Nicolas Jacques Pascal, 84240 LA MOTTE D'AIGUES (FR); GIRARDOT, Pierre-Etienne, 75014 Paris (FR); QUINTERI, Christian, 13100 Aix en Provence (FR)
(74) Mandataire: Lavoix
(86) Numéro de dépôt international: PCT/EP2016/050814
(87) Numéro de publication internationale: WO 2016/113408

(56) Documents cités:
- JP-A- 2001 332 277
- JP-A- 2007 165 132
- JP-A- 2009 009 912

## Description

La présente invention concerne le domaine des réacteurs électrochimiques, et en particulier un procédé de fabrication de joints sur des composants de réacteur électrochimique.

Une pile à combustible est un réacteur électrochimique permettant de produire de l'électricité à partir d'un combustible et d'un comburant, par réaction d'oxydoréduction entre le combustible et le comburant.

Une pile à combustible à membrane échangeuse d'ions comprend deux compartiments fluidiques, chacun pour la circulation d'un gaz réactif respectif, et au moins une membrane séparant les compartiments fluidiques pour l'oxydoréduction des gaz réactifs avec échange d'ions à travers la membrane échangeuse d'ions. Un compartiment fluidique, dit compartiment anodique, est utilisé pour la circulation d'un combustible gazeux, et un compartiment fluidique, dit compartiment cathodique, est utilisé pour la circulation d'un comburant gazeux.

Lorsque la pile à combustible est active, le combustible circule dans le compartiment anodique le long de la face de chaque membrane échangeuse d'ions tournée vers le compartiment anodique, et le comburant circule dans le compartiment cathodique le long de la face de la face de chaque membrane échangeuse d'ions tournée vers le compartiment cathodique. La pile à combustible produit de l'énergie électrique par réaction d'oxydoréduction du combustible et du comburant à travers chaque membrane échangeuse d'ions.

Il est possible de réaliser une pile à combustible formée d'un empilement de plaques séparatrices et de membranes échangeuses d'ions, les plaques séparatrices étant munies de canaux pour la circulation des gaz réactifs le long des faces opposées de chaque membrane échangeuse d'ions. Des canaux anodiques des plaques séparatrices sont raccordés entre eux pour former le compartiment anodique, des canaux cathodiques des plaques séparatrices sont raccordés entre eux pour former le compartiment cathodique.

Il est nécessaire d'assurer l'étanchéité entre les plaques séparatrices et les membranes empilées pour éviter les fuites de gaz. Pour ce faire, il est possible de prévoir de munir les plaques de joints d'étanchéité.

Cependant, une pile à combustible formée d'un empilement peut comprendre plusieurs dizaines de plaques séparatrices et de membranes. La formation des joints peut donc être fastidieuse.

En outre, les joints doivent être fabriqués avec une géométrie précise pour obtenir une étanchéité fiable pour un effort de compression de l'empilement déterminé.

Le document JP2009-9912A divulgue une méthode de fabrication d'un assemblage de piles à combustible impliquant la formation de joints d'étanchéité (17) sur les séparateurs (15). Un des buts de l'invention est de proposer un procédé de fabrication de joints sur des composants d'un réacteur électrochimique, le procédé étant facile et économique à mettre en oeuvre tout en permettant d'obtenir des joints de géométrie précise.

A cet effet, l'invention propose un procédé de fabrication de joints sur des faces de composants de réacteur électrochimique destinés à être empilés pour former un réacteur électrochimique, chaque composant étant en forme de plaque et possédant une première face et une deuxième face opposées, la première face étant prévue pour recevoir un premier joint d'étanchéité et la deuxième face étant prévue pour recevoir un deuxième joint d'étanchéité, le procédé comprenant :
- la mise en forme des premiers joints sur les premières faces des composants, les premiers joints étant au moins partiellement polymérisés ;
- le dépôt des deuxièmes joints sur la deuxième face des composants ; et
- la mise en forme des deuxième joints par une mise en compression d'un empilement formé des composants alternés avec des plaques de moulage, chaque plaque de moulage possédant une face d'appui plaquée contre la première face d'un composant et comprenant une gorge prévue pour recevoir sans le déformer le premier joint formé préalablement sur la première face de ce composant, et une face de moulage plaquée contre la deuxième face d'un autre composant et possédant une surface de moulage pour la mise en forme du deuxième joint déposé sur la deuxième face de cet autre composant du fait de la mise en compression de l'empilement ; et
- la polymérisation au moins partielle des deuxièmes joints.

Dans un mode de mise en oeuvre, la mise en forme des premiers joints comprend :
- le dépôt des premiers joints sur les premières faces des composants ; et
- la mise en forme des premiers joints par une mise en compression d'un empilement formé des composants et des plaques de moulages alternés, chaque plaque de moulage possédant une face d'appui plaquée contre la deuxième face d'un composant, et une face de moulage plaquée contre la première face d'un autre composant et possédant une surface de moulage pour la mise en forme du premier joint déposé sur la première face de cet autre composant du fait de la mise en compression de l'empilement ; et
- la polymérisation au moins partielle des premiers joints.

Dans un mode de mise en oeuvre, des plaques de moulage identiques sont utilisées pour l'empilement de mise en forme des premiers joints et l'empilement de mise en forme des deuxièmes joints.

Dans un mode de mise en oeuvre, les plaques de moulages sont retournées par rapport aux composants pour passer du premier empilement au deuxième empilement.

Dans un mode de mise en oeuvre, chaque plaque de moulage est formée d'un seul tenant.

Dans un mode de mise en oeuvre, chaque plaque de moulage possède une âme portant sur la face de moulage des cales rapportées sur l'âme et délimitant entre elles des gorges de mise en forme de joints.

Dans un mode de mise en oeuvre, les composants sont des plaques séparatrices, comprenant des gorges prévus pour délimités des canaux de circulation de fluide réactif.

L'invention concerne également une plaque de moulage pour la fabrication de joints sur des composants de réacteur électrochimique destinés à être empilés pour former un réacteur électrochimique, chaque composant étant en forme de plaque et étant prévu pour recevoir des joints d'étanchéité sur une première face et une deuxième face opposées du composant, la plaque de moulage possédant une face d'appui comprenant une gorge destinée recevoir sans le déformer un joint formé préalablement sur une face du composant contre laquelle la face d'appui est plaquée, et une face de moulage possédant une surface de moulage pour la mise en forme d'un joint déposée sur une face d'un composant contre laquelle la fac de moulage est plaquée.

Dans un mode de réalisation, la plaque de moulage est formée d'un seul tenant.

Dans un mode de réalisation, la plaque de moulage possède une âme portant sur la face de moulage des cales rapportées sur l'âme et délimitant entre elles des gorges de mise en forme de joints.

L'invention et ses avantages seront mieux compris à la lecture de la description qui va suivre, donnée uniquement à titre d'exemple, et faite en référence aux dessins annexés, sur lesquels :
- les Figures 1 à 4 représentent des étapes successives d'un procédé de fabrication de joints sur des composants de réacteur électrochimique, plus particulièrement sur des plaques séparatrices ;
- La Figure 5 illustres en partie un réacteur électrochimique formé à l'aide des plaques séparatrices ;
- les Figures 6 et 7 illustrent des plaques de moulage pour la mise en oeuvre du procédé de fabrication.

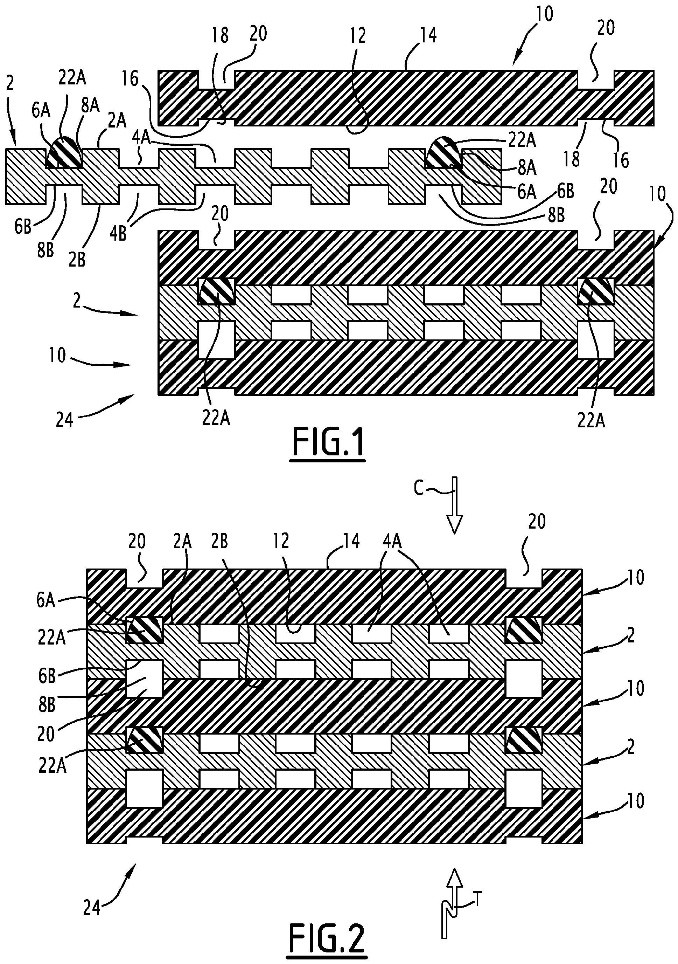

La mise en oeuvre du procédé de fabrication illustré sur les Figures 1 à 4 permet de former des joints une pluralité de composants de réacteur électrochimique, en formant un joint sur chacune des deux faces opposées des composants en forme de plaque.

Comme illustré sur la Figure 1, les composants de réacteur électrochimique sont ici des plaques séparatrices 2 bipolaires.

Chaque plaque séparatrice 2 est destinée à être interposée entre deux membranes échangeuses d'ion dans un empilement d'un réacteur électrochimique.

Chaque plaque séparatrice 2 comprend une première face 2A et une deuxième face 2B chacune munies de canaux 4A, 4B pour la circulation de gaz réactifs.

La première face 2A et la deuxième face 2B possèdent chacune une portée d'étanchéité 6A, 6B prévue pour recevoir un joint d'étanchéité disposé pour assurer l'étanchéité avec une membrane échangeuse d'ions plaquée contre cette face, ou avec une plaque séparatrice adjacente.

Les portées d'étanchéité 6A, 6B se situent de préférence à la périphérie de la plaque séparatrice 2 et entourent les canaux 4A, 4B de circulation des gaz réactifs pour assurer une étanchéité autour de ceux-ci. La première face 2A et la deuxième face 2B possèdent chacune une portée d'étanchéité s'étendant suivant une ou plusieurs ligne(s) fermée(s), pour délimiter des zones étanches sur la plaque séparatrice 2.

La première face 2A et la deuxième face 2B possèdent chacune des gorges d'étanchéité 8A, 8B pour la réception d'un joint d'étanchéité, les portées d'étanchéité 6A, 6B étant prévues au fond des gorges d'étanchéité 8A, 8B. En variante, les portées d'étanchéité 6A, 6B ne sont pas prévues au fond de gorges.

Le procédé de fabrication est mise en oeuvre à l'aide de plusieurs plaques de moulage 10 identiques entre elles.

Chaque plaque de moulage 10 comprend une face de moulage 12 et une face d'appui 14.

La face de moulage 12 est munie d'une surface de moulage 16 prévue pour venir en contact avec un joint déposé sur une face d'une plaque séparatrice 2 appliquée contre laquelle est appliquée la face de moulage 12 de la plaque de moulage 10.

La surface de moulage 16 est prévue pour mettre en forme le joint avec une géométrie précise, du fait de l'application de la plaque de moulage 10 contre la plaque séparatrice 12. La surface de moulage 16 est en particulier prévue pour former le joint avec une hauteur H prédéterminée, de préférence comprise dans une plage de tolérance, par exemple avec une tolérance de +/- quelques micromètres.

La face de moulage 12 comprend ici une gorge de moulage 18 au fond de laquelle est prévue la surface de moulage 16.

La face d'appui 14 de chaque plaque de moulage 10 est prévue pour venir en appui contre une face d'une plaque séparatrice 2 munie d'un joint déposé, formé et au moins partiellement ou complètement polymérisé, sans venir en contact avec ce joint.

La face d'appui 14 comprend une gorge de réception 20 prévue pour recevoir un joint d'étanchéité préalablement formé sur une face d'une plaque séparatrice 2 lorsque cette face de la plaque séparatrice 2 est plaquée contre la face d'appui 14 de la plaque de moulage 10. La gorge de réception 20 est disposée pour se situer au droit de la portée d'étanchéité de la face de la plaque séparatrice, et présente des dimensions permettant aux parois de la gorge de réception 20 de ne pas interférer le joint préalablement formé sur la plaque séparatrice 2.

Comme visible sur la Figure 1, la gorge de moulage 18 et la gorge de réception 20 sont disposés au droit l'une de l'autre. La gorge de moulage 18 présente une profondeur P1 strictement inférieure à celle P2 de la gorge de réception 20.

Le procédé de fabrication de joint sur les plaques séparatrices va maintenant être décrit en référence aux Figures 1 à 4.

La première face 2A et la deuxième face 2B des plaques séparatrices 2 sont initialement dépourvues de joint d'étanchéité.

Dans une première étape (Figure 1), un premier joint 22A est déposé sur la première face 2A d'une plaque séparatrice 2. Le premier joint 22A est déposé sur la portée d'étanchéité 6A de la première face 2A.

L'expression « déposer le joint » signifie ici déposer un cordon de joint dans un état de viscosité permettant sa mise en forme. Le joint est prévu dans une matière synthétique ou naturelle polymérisable. Au moment du dépôt, le joint n'est pas polymérisé.

Le premier joint 22A est déposé sur la plaque séparatrice 2 de manière connue, par exemple à l'aide d'une machine automatique possédant une buse d'injection déplaçable par rapport à la plaque séparatrice pour appliquer le premier joint 22A en suivant la portée d'étanchéité 6A.

Les plaques séparatrices 2 dont les premières faces 2A sont munies de premiers joints 22A non polymérisés sont utilisées pour former un premier empilement 24 dans lequel sont alternées les plaques séparatrices 2 et les plaques de moulage 10, les faces de moulages 12 des plaques de moulage 10 étant appliquées contre les premières faces 2A des plaques séparatrices 2, et les faces d'appui 14 des plaques de moulage 10 étant appliquées contre les deuxièmes faces 2B des plaques séparatrices 2.

De préférence, les premières faces 2A des plaques séparatrices 2 sont de préférence tournées vers le haut, et les faces de moulages 12 des plaques de moulage 10 sont tournées vers le bas.

Le premier empilement 24 est réalisé au fur et à mesure, chaque plaque séparatrice 2 étant ajoutée une fois que le premier joint 22A a été déposé sur celle-ci. En variante, les premiers joints 22A sont déposés sur plusieurs plaques séparatrices 2, avant d'empiler ces plaques séparatrices 2 avec des plaques de moulage 10 en alternance.

Du fait de l'application de la face de moulage d'une plaque de moulage contre la première face de chaque plaque séparatrice, la surface de moulage de la plaque de moulage s'applique contre le premier joint déposé sur cette plaque séparatrice. Il en résulte la mise en forme du joint.

L'expression « mise en forme du joint » désigne ici le fait de conférer au joint la géométrie requise, ici en particulier la hauteur H requise. Comme représenté sur les Figure 1 et 2, un joint mis en forme présente ici un méplat à son sommet.

Dans une troisième étape (Figure 2), les premiers joints 22A sont au moins partiellement polymérisés. Les premiers joints 22A sont seulement partiellement polymérisés ou sensiblement complètement polymérisé. Les premiers joints 22A sont suffisamment polymérisés de manière à conserver leur géométrie après démoulage. Les premiers joints 22A sont par exemple polymérisés en surface de manière à conserver la géométrie, tout en étant pas encore polymérisé à coeur.

Pour assurer la polymérisation, le premier empilement 24 est par exemple chauffé à une température déterminée et pendant une durée déterminée (Flèche T).

De préférence, un effort de compression C (Figure 2) est exercé sur le premier empilement 24 pour appliquer la face de moulage 12 de chaque plaque de moulage 10 contre la première face 2A de la plaque séparatrice 2 en regard. L'effort de compression est maintenu pour la mise en forme et pendant la polymérisation.

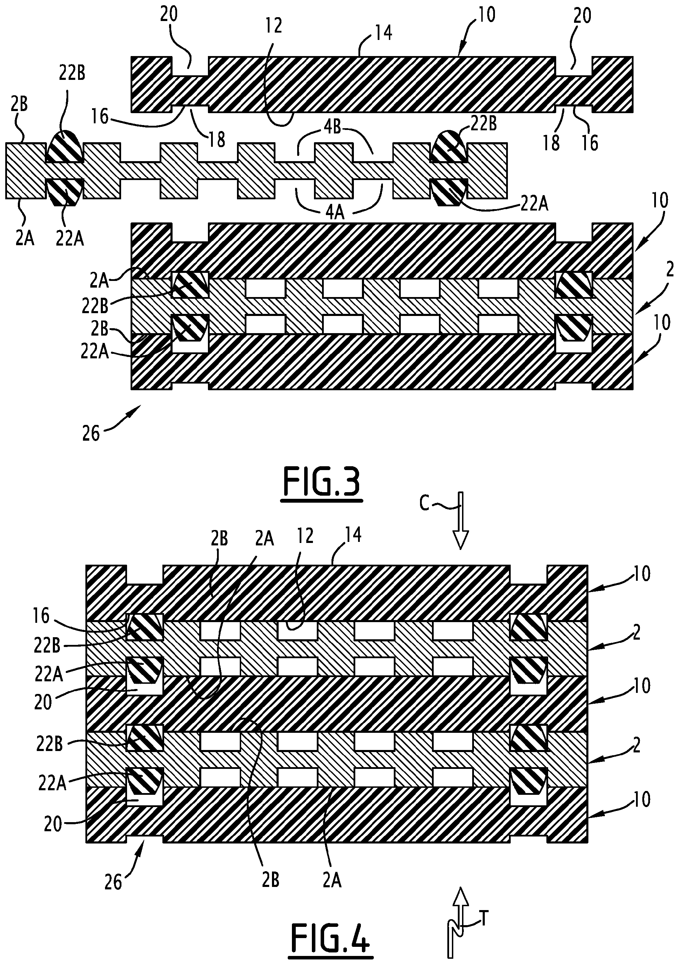

Dans une quatrième étape (Figure 3), chaque plaque séparatrice 2 est retirée du premier empilement. Un deuxième joint 22B non polymérisé est déposé sur la deuxième face 2B de la plaque séparatrice 2, plus particulièrement sur la portée d'étanchéité 6B de la deuxième face 2B.

Les plaques séparatrices 2 dont les deuxièmes faces 2B sont munies des deuxièmes joints 22B non polymérisés sont utilisées pour former un deuxième empilement 26, dans lequel les plaques séparatrices 2 sont empilées en alternance avec les plaques de moulage 10, les faces de moulage 12 des plaques de moulage 10 étant appliquées contre les deuxièmes faces 2B des plaques séparatrices 2, et les face d'appui 14 des plaques de moulage 10 étant appliquées contre les premières faces 2A des plaques séparatrices 2. Les premiers joints 22A sont reçus dans les gorges de réception 20 des faces d'appui 14 sans interférer avec les plaques de moulage 10.

Dans le deuxième empilement 26, les plaques séparatrices 2 sont retournées par rapport au premier empilement 24 alors que les plaques de moulage 2 ne sont pas retournées.

Dans le deuxième empilement 26, les deuxièmes faces 2B des plaques séparatrices 2 sont de préférence tournées vers le haut, et les faces de moulages 12 des plaques de moulage 10 sont tournées vers le bas.

Du fait de la réalisation du deuxième empilement 26, les deuxièmes joints 22B sont mis en forme par les plaques de moulage 10 avec la géométrie souhaitées, et en particulier avec la hauteur H souhaitée.

De préférence, le deuxième empilement est soumis à un effort de compression (Flèche C) pour la mise en forme des deuxièmes joints 22B. L'effort de compression est maintenu pour la mise en forme et pendant la polymérisation.

Grâce aux gorges de réception des faces d'appuis, les premiers joints préalablement formés sur les premières faces des plaques séparatrices ne sont pas déformés ou mis sous contrainte dans le deuxième empilement. Ainsi, il conserve la forme qui leur a été conférée dans le premier empilement.

Une fois le deuxième empilement réalisé, les deuxièmes joints sont polymérisés complètement. Si les premiers joints étaient polymérisés seulement partiellement à l'issue de la polymérisation appliquée au premier empilement, leur polymérisation est complétée lors de la polymérisation appliquée au deuxième empilement.

Pour passer du premier empilement (Figure 2) au deuxième empilement (Figure 4), il est possible de procéder plaque par plaque, en transférant une plaque de moulage 10 du premier empilement 24 au deuxième empilement 26 sans la retourner, puis en prenant la plaque séparatrice 2 qui étant située en dessous dans le premier empilement 24, en déposant le deuxième joint 22B sur sa deuxième face 2B, puis en la posant sur le deuxième empilement 26 après l'avoir retournée.

Les premiers joints 22A et les deuxièmes joints 22B des plaques séparatrices 2 sont formés avec les mêmes plaques de moulage 10, en utilisant un nombre réduit de plaques de moulage 10, du fait que chaque plaque de moulage 10 sert au moulage d'un joint sur une plaque séparatrice 2 située d'un côté et sert d'appui à une autre plaque séparatrice 2 située du côté opposé.

Le nombre de plaques de moulage 10 réduit limite le coût de l'outillage pour la mise en oeuvre du procédé de fabrication, puisqu'un nombre limité de plaques de moulage 10 suffit, ainsi que la mise en oeuvre elle-même du procédé de fabrication, puisque les manipulations de plaques de moulage 10 sont également limitées. Le stockage des plaques de moulage 10 est en outre facilité. Ceci est particulièrement avantageux pour la réalisation de réacteur électrochimique pouvant comprendre plusieurs dizaines de plaques séparatrices 2 empilée.

Le procédé de fabrication peut être mis en oeuvre de manière efficace notamment pour passer du premier empilement au deuxième empilement.

En outre, les joints d'étanchéité peuvent être réalisés avec une meilleure maîtrise des temps de polymérisation. Tous les premiers joints sont réalisés avec un temps de polymérisation proche ou identique, et tous les deuxièmes joints sont réalisés avec un temps de polymérisation proche.

De préférence, les premiers joints 22A sont seulement partiellement polymérisés dans le premier empilement 24 lorsque l'on passe au dépôt des deuxièmes joints 22B et à la formation du deuxième empilement 26. Ceci permet de limiter la différence de durée de polymérisation des premiers joints 22A d'une part, et des deuxièmes joints 22B d'autre part.

Le premier joint 22A et le deuxième joint 22B de chaque plaque séparatrice 2 sont identiques. Ils s'étendent suivant la ou les mêmes ligne(s) et ils présentent en section la même géométrie. Le premier joint 22A et le deuxième joint 22B de chaque plaque séparatrice 2 sont formés avec des faces de moulage 12 de plaque de moulage 10 identiques.

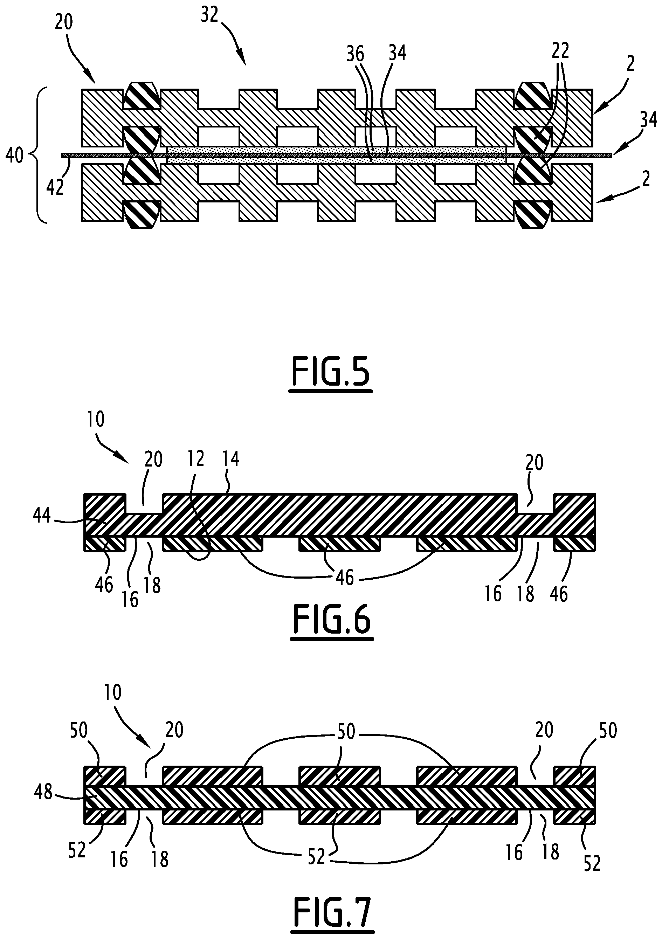

Tel que représenté sur la Figure 5, un réacteur électrochimique 30 à membrane échangeur d'ions comprend un empilement 32 dans lequel sont alterné les plaques séparatrices 2 et des ensembles membrane/électrodes 34.

Chaque ensemble membrane/électrodes 34 - aussi désigné EME - comprend une membrane 36 échangeuse d'ions prise en sandwich entre deux électrodes 38. Chaque ensemble membrane/électrode 34 est pris en sandwich entre deux plaques séparatrices 2.

Seul un ensemble plaque séparatrice/EME/plaque séparatrice est ici représenté, mais l'empilement 32 comprend en pratique une pluralité de tels ensembles plaque séparatrice/EME/plaque séparatrice. Chaque ensemble plaque séparatrice/EME/plaque séparatrice définit une cellule 40 électrochimique élémentaire du réacteur électrochimique 30, qui en comprend en pratique plusieurs.

Les joints 22 des faces en regard des plaques séparatrices 2 assurent l'étanchéité aux gaz réactifs entre les plaques séparatrices 2, et notamment l'étanchéité des canaux de circulation de gaz réactifs de ces faces.

La membrane 36 de l'ensemble membrane/électrodes possède une région périphérique 42 qui déborde par rapport aux électrodes 38. Cette région périphérique 42 est pincée entre les joints 22 des faces en regard des plaques séparatrices 2 prenant l'ensemble membrane/électrodes 34 en sandwich. Dans une variante, la membrane de l'ensemble membrane/électrodes est dépourvu de région périphérique saillante, et les des faces en regard des plaques séparatrices vient en contact l'un avec l'autre.

Le réacteur électrochimique 30 est par exemple une pile à combustible permettant de produire de l'électricité à partir d'un combustible et d'un comburant, par réaction d'oxydoréduction entre le combustible et le comburant. En variante, le réacteur électrochimique est un électrolyseur permettant de produire du dihydrogène et du dioxygène à partir d'eau et d'électricité.

Telles que représentées sur les Figures 1 à 4, les plaques de moulage 10 sont réalisées en seule pièce de matière. Les plaques de moulage 10 sont par exemple réalisées en matière plastique. Les gorges de réception 20 dont la géométrie précise n'est pas indispensable, peuvent résulter du moulage des plaques de moulage 10, tandis que les surfaces de moulage 16 sont de préférence obtenues par usinage, afin d'avoir une géométrie très précise.

Dans la variante illustrée sur la Figure 6, une plaque de moulage 10 est formée d'une plaque de support 44 dont une face définit la face d'appui 14 de la plaque de moulage et est munie de gorges de réception 20, et l'autre face porte des cales 46 rapportées sur la plaque de support 44 et délimitant entre elles les gorges de moulage 18. Le fond des gorges de moulage 18 est formé par ladite autre face de la plaque de support 44 issue du moulage ou reprise en usinage, au moins au droit des gorge de moulage 18, afin d'avoir une géométrie très précise.

Dans la variante de la Figure 7, une plaque de moulage 10 comprend une plaque de support 48 munie sur ses deux faces de cales 50, 52 pour définir sur une face les gorges de réception 20 et sur l'autre face les gorges de moulage 18.

Le procédé de fabrication des Figures 1 à 4 a été décrit pour la fabrication de joints sur des plaques séparatrice. Le procédé de fabrication est applicable à d'autres composants de réacteur électrochimique en forme de plaque. Par exemple, le procédé de fabrication est applicable à des membranes échangeuse d'ions, pour former les joints d'étanchéité sur les membranes échangeuses d'ions, en remplacement ou en compléments de joints d'étanchéité fabriqués sur des plaques séparatrice.

## Revendications

1. Procédé de fabrication de joints sur des faces de composants (2) de réacteur électrochimique destinés à être empilés pour former un réacteur électrochimique, chaque composant (2) étant en forme de plaque et possédant une première face (2A) et une deuxième face (2B) opposées, la première face étant prévue pour recevoir un premier joint d'étanchéité (22A) et la deuxième face étant prévue pour recevoir un deuxième joint (22B)d'étanchéité, le procédé comprenant :
- la mise en forme des premiers joints (22A) sur les premières faces (2A) des composants, les premiers joints étant au moins partiellement polymérisés ;
- le dépôt des deuxièmes joints (22B) sur les deuxièmes faces des composants (2B) ; et
- la mise en forme des deuxième joints (22B) par une mise en compression d'un empilement formé des composants alternés avec des plaques de moulage (10), chaque plaque de moulage (20) possédant une face d'appui (14) plaquée contre la première face d'un composant et comprenant une gorge (20) prévue pour recevoir sans le déformer le premier joint (22A) formé préalablement sur la première face (2A) de ce composant, et une face de moulage (12) plaquée contre la deuxième face (2B) d'un autre composant et possédant une surface de moulage (16) pour la mise en forme du deuxième joint (2B) déposé sur la deuxième face de cet autre composant du fait de la mise en compression de l'empilement ; et
- la polymérisation au moins partielle des deuxièmes joints (22B).

2. Procédé de fabrication selon la revendication 1, dans lequel la mise en forme des premiers joints (22A) comprend :
- le dépôt des premiers joints (22A) sur les premières faces (2A) des composants ; et
- la mise en forme des premiers joints (22A) par une mise en compression d'un empilement formé des composants (2) et des plaques de moulages (10) alternés, chaque plaque de moulage possédant une face d'appui (14) plaquée contre la deuxième face (2B) d'un composant (2), et une face de moulage (12) plaquée contre la première face d'un autre composant et possédant une surface de moulage (16) pour la mise en forme du premier joint (22A) déposé sur la première face (2A) de cet autre composant du fait de la mise en compression de l'empilement ; et
- la polymérisation au moins partielle des premiers joints (22A).

3. Procédé de fabrication selon les revendications 1 et 2, dans lequel des plaques de moulage (10) identiques sont utilisées pour l'empilement de mise en forme des premiers joints et l'empilement de mise en forme des deuxièmes joints.

4. Procédé de fabrication selon la revendication 3, les plaques de moulages (10) sont retournées par rapport aux composants pour passer du premier empilement au deuxième empilement.

5. Procédé de fabrication selon l'une quelconque des revendications précédentes, dans lequel chaque plaque de moulage (10) est formée d'un seul tenant.

6. Procédé de fabrication selon l'une quelconque des revendications 1 à 4, dans lequel chaque plaque de moulage (10) possède une âme portant sur la face de moulage des cales rapportées sur l'âme et délimitant entre elles des gorges de mise en forme de joints.

7. Procédé de fabrication selon l'une quelconque des revendications précédentes, dans lequel les composants (2) sont des plaques séparatrices, comprenant des gorges (4A, 4B) prévus pour délimités des canaux de circulation de fluide réactif.

## Patentansprüche

1. Verfahren zum Herstellen von Dichtungen auf Flächen von Komponenten (2) eines elektrochemischen Reaktors, die vorgesehen sind, für die Bildung eines elektrochemischen Reaktors gestapelt zu werden, wobei jede Komponente (2) in Form einer Platte ausgebildet ist und eine erste Fläche (2A) und eine entgegengesetzte zweite Fläche (2B) besitzt, wobei die erste Fläche vorgesehen ist, eine erste Dichtung (22A) aufzunehmen und die zweite Fläche vorgesehen ist, eine zweite Dichtung (22B) aufzunehmen, wobei das Verfahren umfasst:
- Formen von ersten Dichtungen (22A) auf den ersten Flächen (2A) der Komponenten, wobei die ersten Dichtungen zumindest teilweise polymerisiert sind;
- Ablagern von zweiten Dichtungen (22B) auf den zweiten Flächen der Komponenten (2B); und
- Formen der zweiten Dichtungen (22B) durch Komprimieren eines Stapels, der von alternierenden Komponenten gebildet ist, mit Formplatten (10), wobei jede Formplatte (20) eine Anlagefläche (14) besitzt, die gegen die erste Fläche einer Komponente gepresst wird und eine Nut (20) umfasst, die vorgesehen ist, die erste Dichtung (22A), die zuvor auf der ersten Fläche (2A) dieser Komponente gebildet wurde, aufzunehmen, ohne sie zu deformieren, und eine Formfläche (12) umfasst, die gegen die zweite Fläche (2B) einer anderen Komponente gepresst wird und eine Formfläche (16) für die Formgebung der zweiten Dichtung (2B) besitzt, die auf der zweiten Fläche dieser anderen Komponente aufgebracht ist, durch die Tatsache der Komprimierung des Stapels; und
- zumindest teilweises Polymerisieren der zweiten Dichtungen (22B).

2. Herstellungsverfahren nach Anspruch 1, bei dem die Formgebung der ersten Dichtungen (22A) umfasst:
- Ablagern der ersten Dichtungen (22A) auf den ersten Flächen (2A) der Komponenten; und
- Formen der zweiten Dichtungen (22A) durch Komprimieren eines aus den Komponenten (2) und Formplatten (10) alternierend gebildeten Stapels, wobei jede Formplatte eine Anlagefläche (14), die gegen die zweite Fläche (2B) einer Komponente (2) gepresst wird, und eine Formfläche (12) besitzt, die gegen die erste Fläche einer anderen Komponente gepresst wird und eine Formfläche (16) für die Formgebung der auf die erste Fläche (2A) dieser anderen Komponente abgelagerten ersten Dichtung (22A) durch die Tatsache der Komprimierung des Stapels besitzt; und
- zumindest teilweises Polymerisieren der ersten Dichtungen (22A).

3. Herstellungsverfahren nach den Ansprüchen 1 und 2, bei dem identische Formplatten (10) für den Stapel der Formgebung der ersten Dichtungen und den Stapel der Formgebung der zweiten Dichtungen verwendet werden.

4. Herstellungsverfahren nach Anspruch 3, bei dem die Formplatten (10) in Bezug auf die Komponenten umgedreht werden, um vom ersten Stapel zum zweiten Stapel überzugehen.

5. Herstellungsverfahren nach einem beliebigen der vorhergehenden Ansprüche, bei dem jede Formplatte (10) aus einem einzigen Stück gebildet ist.

6. Herstellungsverfahren nach einem beliebigen der Ansprüche 1 bis 4, bei dem jede Formplatte (10) einen Kern besitzt, der auf der Formfläche an dem Kern angebrachte Abstandsstücke trägt, die zwischen sich Nuten für die Formgebung der Dichtungen begrenzen.

7. Herstellungsverfahren nach einem beliebigen der vorhergehenden Ansprüche, bei dem die Komponenten (2) Trennplatten sind, die für die Begrenzung von Strömungskanälen des Reaktionsfluids vorgesehene Nuten (4A, 4B) umfasst.

## Claims

1. A method for producing seals on faces of electrochemical reactor components (2) intended to be stacked in order to form an electrochemical reactor, each component (2) being in the form of a plate and having a first face (2A) and an opposing second face (2B), the first face being designed to receive a first seal (22A) and the second face being designed to receive a second seal (22B), the method comprising:
- shaping the first seals (22A) on the first faces (2A) of the components, the first seals being at least partially polymerized;
- depositing the second seals (22B) on the second face of the components (2B); and
- shaping the second seals (22B) by compressing a stack formed from the components alternating with the molding plates (10), each molding plate (20) having a bearing face (14) pressed against the first face of a component and comprising a groove (20) designed to receive, without deforming, the first seal (22A) previously formed on the first face (2A) of said component, and a molding face (12) pressed against the second face (2B) of another component and having a molding surface (16) for shaping the second seal (2B) deposited on the second face of said other component as a result of compressing the stack; and
- at least partially polymerizing the second seals (22B).

2. The production method according to claim 1, wherein the shaping of the first seals (22A) comprises:
- depositing the first seals (22A) on the first faces (2A) of the components; and
- shaping the first seals (22A) by compressing a stack formed from the alternating components (2) and molding plates (10), each molding plate having a bearing face (14) pressed against the second face (2B) of a component (2), and a molding face (12) pressed against the first face of another component and having a molding surface (16) for shaping the first seal (22A) deposited on the first face (2A) of said other component as a result of compressing the stack; and
- at least partially polymerizing the first seals (22A).

3. The production method according to claims 1 and 2, wherein identical molding plates (10) are used for the shaping stack of the first seals and the shaping stack of the second seals.

4. The production method according to claim 3, the molding plates (10) are turned over relative to the components to go from the first stack to the second stack.

5. The production method according to any one of the preceding claims, wherein each molding plate (10) is formed in a single piece.

6. The production method according to any one of claims 1 to 4, wherein each molding plate (10) has a core bearing, on the molding face, shims attached on the core and defining seal shaping grooves between them.

7. The production method according to any one of the preceding claims, wherein the components (2) are separator plates, comprising grooves (4A, 4B) designed to define reactive fluid circulation channels.
